# FASCICULE DE BREVET EUROPEEN

(11) **EP 0 524 897 B1**
(45) Date de publication et mention de la délivrance du brevet: **12.10.1994**
(21) Numéro de dépôt: 92420250.0
(22) Date de dépôt: 23.07.1992
(51) Int. Cl.: B65D 35/14

(54) **Tête de tube en matière plastique à revêtement intérieur à effet barrière et pièce utilisable pour ce revêtement**
Tubenkopf aus Kunststoff mit Innenverkleidung für eine Sperrwirkung und Gegenstand für diese Verkleidung
Plastic tube head with barrier effect inner layer and part forming this layer

(30) Priorité: 25.07.1991 FR 9109689
(43) Date de publication de la demande: 27.01.1993
(73) Titulaire: CEBAL S.A., F-92115 Clichy (FR)
(72) Inventeur: Jupin, Alain, F-51800 Sainte Menehould (FR); Chapet, Gérard, F-75017 Paris (FR)
(74) Mandataire: Vanlaer, Marcel

(56) Documents cités:
- EP-A- 0 130 239
- EP-A- 0 315 554
- AU-B- 545 604
- BE-A- 666 719

## Description

La présente invention concerne une tête de tube en première matière plastique munie d'un revêtement intérieur à effet barrière, et ce revêtement en lui-même fabriqué séparément.

On connaît par le document EP-A-0130239 une tête de tube en matière plastique comportant un goulot qui surmonte une épaule sensiblement tronconique, cette tête ayant un revêtement intérieur par exemple en polyester soudé par friction à l'intérieur de ce goulot et de cette épaule en PE (polyéthylène) lesquels forment un recouvrement annulaire qui enserre ledit revêtement intérieur et constitue l'extérieur de la tête. Ce revêtement intérieur est approvisionné comme une pièce ou rondelle séparée fabriquée par moulage, sa liaison par friction avec le PE de la tête du tube a des extrémités débouchant sur l'intérieur du tube sensibles à la perméation d'agents tels que la vapeur d'eau. Et surtout il ne donne qu'un effet barrière, vis-à-vis de l'oxygène, des arômes ou des parfums, faible.

Le document AU-B-545 604 décrit un revêtement intérieur semblable en polyester du type PBT, lui aussi fabriqué par moulage. Cette pièce annulaire monobloc ayant une cheminée axiale et une épaule sensiblement tronconique coiffe l'outillage intérieur servant au moulage par injection de la tête, ce moulage formant un recouvrement annulaire par exemple en PE qui enserre la pièce de revêtement intérieur en opérant une fixation. Cette fixation n'est pas un soudage, les matières plastiques en présence n'étant pas de natures compatibles en fusion.

Par ailleurs, le document BE-A-666 719 décrit une tête de tube en matière plastique comportant un goulot qui surmonte une épaule sensiblement tronconique, ladite tête ayant un revêtement intérieur annulaire s'étendant sur au moins 50 % de la surface intérieure sensiblement tronconique de ladite épaule, ledit revêtement consistant en un élément multicouche au moins en partie polymérique comprenant une couche superficielle extérieure en matière plastique par laquelle il est fixé à un recouvrement annulaire en une première matière plastique qui l'enserre et constitue l'extérieur de ladite tête, ledit élément comprenant au moins une couche à effet barrière et une couche superficielle intérieure en polyoléfine ou en polyester.

Ce même document révèle un procédé de fabrication d'un revêtement intérieur annulaire de tête de tube, ledit revêtement étant multicouche au moins en partie polymérique et devant définir l'intérieur de la tête en y étant enserré par un recouvrement annulaire en matière plastique qui constitue l 'extérieur de ladite tête, le revêtement comprenant une ou plusieurs couche(s) interne(s) à effet barrière vis-à-vis de l'oxygène, des arômes ou des parfums, deux couches superficielles en matière plastique respectivement extérieure et intérieure et des couches adhésives entre toutes les couches précédentes, la matière plastique de la couche superficielle extérieure étant de même nature que la matière plastique dudit recouvrement annulaire et les deux dites couches superficielles étant en polyoléfine ou en polyester, ledit revêtement comportant un épaulement sensiblement tronconique et étant fabriqué par formage d'une portion de bande multicouche ébauche dudit revêtement.

Dans ce document, le revêtement intérieur a une couche intermédiaire à effet barrière en métal, typiquement de l'aluminium. Ce revêtement à paroi tronconique devant recouvrir l'épaule du tube est fabriqué à partir d'une feuille plate préalablement plissée radialement ou munie de fentes radiales pour absorber le surplus de matériau de la forme tronconique, les couches superficielles intérieures et extérieures du revêtement étant ensuite assemblées avec cette feuille pour la déformation tronconique. La corrosion de l'extrémité affleurante du revêtement par le produit contenu dans le tube doit être évitée par des replis ou par un rebord axial inséré dans l'épaisseur de la tête.

La demanderesse s'est donné pour tâche de mettre au point un revêtement intérieur continu permettant un choix de l'effet barrière vis-à-vis de l'oxygène, des arômes ou des parfums, et en particulier d'obtenir une barrière très efficace, ce revêtement intérieur recouvrant le goulot aussi bien que l'épaule du tube, et ayant de préférence une liaison améliorée avec l'extérieur de la tête de tube.

### EXPOSE DE L'INVENTION

L'invention a pour objet la tête de tube selon le préambule de la revendication 1 (connue par BE-A-666 719), caractérisée en ce que ledit revêtement intérieur annulaire s'étend aussi sur la surface intérieure du goulot sur au moins 80 % de la hauteur de ladite surface en parfaite continuité avec son dit revêtement de la surface intérieure de l'épaule, et en ce que sa ou ses couche(s) à effet barrière est ou sont polymérique(s) et d'épaisseur totale comprise entre 0,008 et 0,05 mm et sa couche superficielle intérieure a une épaisseur comprise entre 0,25 et 1,2 mm.

Le revêtement intérieur précédent est fabriqué préalablement par formage à chaud, de préférence par thermoformage avec déformation et placage sur un outil mâle ou dans un outil femelle par dépression. Le choix de l'ébauche multicouche ainsi déformée à chaud permet une sélection complète de la ou des couches barrières, des couches superficielles importantes pour le soudage ou le recouvrement annulaire de la tête et pour la bonne tenue de l'intérieur de la tête aux agents agressifs, et des couches intermédiaires adhésives. Les essais de la demanderesse ont montré, qu'en effectuant le thermoformage à la température du ramollissement des couches superficielles qui sont beaucoup plus épaisses et ont des points de fusion plus faibles que les couches barrière, on obtenait des pièces monoblocs utilisables comme revêtement intérieur, soit après découpage d'un orifice sommital correspondant à l'orifice du goulot du tube, soit après une opération d'amincissement global ou périphérique remplaçant ce découpage et préparant un opercule facilement découpable du goulot du tube.

Il est préféré d'avoir une première matière plastique de même nature que la matière plastique de la couche superficielle extérieure de ladite pièce monobloc devenant revêtement intérieur, cette couche étant alors soudée et en parfaite continuité avec le recouvrement annulaire moulé autour de ce revêtement.

Il est également préféré, dans le cas le plus général et aussi en combinaison avec la mesure précédente, que la matière plastique de la couche superficielle intérieure, une polyoléfine ou un polyester, soit de même nature que ladite première matière plastique du recouvrement annulaire: cette matière plastique de la couche superficielle intérieure est alors parfaitement soudée au recouvrement annulaire sur les tranches d'extrémité du recouvrement intérieur. Cela est en outre bien préférable pour la fabrication de la pièce monobloc de revêtement intérieur, le fait d'avoir la même matière plastique pour les deux couches superficielles épaisses facilitant le thermoformage et améliorant la qualité des surfaces obtenues. Le thermoformage peut se faire alors dans un même état ramolli pour les deux couches superficielles de l'ébauche.

Lorsque la première matière plastique est de même nature que la matière plastique de la couche superficielle extérieure du revêtement intérieur, la continuité de ces matières plastiques est parfaite et il est difficile de distinguer microscopiquement une trace de leur jonction. Par contre, on distingue au microscope à infra-rouge la couche adhésive, d'épaisseur typiquement comprise entre 0,006 et 0,05 mm, qui revêt une couche ou la couche à effet barrière venant à la suite dans ledit revêtement intérieur. Cette couche barrière est du reste facilement distinguée des couches voisines.

Lorsque les matières plastiques des deux dites couches superficielles et de ladite première matière plastique sont de même nature, il est encore préféré d'utiliser pleinement ce revêtement intérieur, et la souplesse de sa fabrication qui sera illustrée par les exemples, en lui faisant recouvrir toute la surface intérieure tronconique de l'épaule de la tête et en le prolongeant par un rebord annulaire d'extrémité incliné vers le bas, qui vient ou viendra à proximité du haut d'une jupe multicouche à couche barrière du tube. A ce sujet, la jonction de la tête avec la jupe du tube peut être opérée soit à l'occasion du moulage direct de la tête sur la jupe, soit après moulage séparé de la tête qui est ensuite fixée sur la jupe par exemple par friction ou "rotation" ou par collage.

Grâce à ce rebord inférieur, on peut alors aisément arrêter les portions du recouvrement annulaire qui enserrent aussi bien la tranche d'extrémité inférieure de ce rebord inférieur que la tranche d'extrémité supérieure du revêtement au ras du bord intérieur de ces tranches, évitant tout bourrelet intérieur qui gênera la progression du produit pâteux contenu dans le tube. Ces arrêts au ras sont justifiés puisqu'il y a en ces endroits des soudures parfaites à la surface intérieure du tube.

Le revêtement intérieur peut encore comprendre, comme déjà annoncé, à l'extrémité supérieure de sa portion recouvrant l'intérieur du goulot une partie en forme d'opercule la prolongeant et l'obstruant. On a vu que cette fermeture était obtenue directement dans le thermoformage de la pièce de revêtement.

Cette partie en forme d'opercule comporte de préférence un amincissement périphérique, facilitant sa découpe ou sa rupture par enfoncement dans le tube, celle-ci pouvant laisser subsister une patte non amincie et non rompue. L'opercule peut aussi être aminci.

Dans tout ce qui précède, la tête du tube de l'invention a de préférence un revêtement intérieur ayant la structure et la composition suivantes:
- épaisseur 0,5 à 2,5 mm
- au moins 5 couches liées entre elles et comprenant:
   a) 2 couches superficielles intérieure et extérieure de même nature que ladite première matière plastique formant l'extérieur de la tête, chacune d'épaisseur comprise entre 0,25 et 1,2 mm et en l'une et même matière plastique du groupe formé par PE,PP et PET;
   b) une ou plusieurs couches internes à effet barrière d'épaisseur totale 0,008 à 0,05 mm, chaque couche étant en l'une des matières du groupe formé par: EVOH, PVDC, PAN, PVDF, PA, saran (copolymère de chlorure de vinyle et de chlorure de vinylidène), MXD6 (métaxylène diamine 6).
   c) des couches adhésives entre toutes les couches précédentes.

   L'invention a aussi pour objet la pièce monobloc utilisée ou pouvant être utilisée comme revêtement intérieur dans la tête précédente selon l'une quelconque des variantes envisagées.
   Selon le préambule de la revendication 9, (comme connu par AU-B-545 604 et EP-A-0 130 239) cette pièce comporte essentiellement une cheminée axiale surmontant un épaulement annulaire sensiblement tronconique, ladite pièce ayant une paroi comprenant au moins une couche à effet barrière, le rapport H/dᵢ de la hauteur totale de ladite pièce au diamètre intérieur de ladite cheminée étant compris entre 1 et 2,5, et est caractérisée en ce qu'elle a une épaisseur comprise entre 0,5 et 2,5 mm et que sa paroi consiste essentiellement en:
- deux couches superficielles respectivement intérieure et extérieure, toutes deux en PP ou PP ou PET, chacune d'épaisseur comprise entre 0,25 et 1,2 mm ;
- une ou plusieurs couches internes à effet barrière d'épaisseur totale 0,008 à 0,05 mm, chacune étant en l'une des matières du groupe formé par: EVOH, PVDC, PAN, PVDF, PA, saran, MXD6;
- des couches adhésives entre toutes les couches.

Cette pièce peut avoir son extrémité haute obturée par une partie transversale en forme d'opercule, cette modalité a été décrite à propos de la tête de tube.

De façon encore plus typique, l'épaulement annulaire de la pièce monobloc se prolonge par un bord annulaire d'extrémité incliné vers le bas, de préférence sensiblement axial, et le rapport du diamètre intérieur de ce bord annulaire au diamètre intérieur de la cheminée est compris entre 2 et 3 tandis que le diamètre intérieur dudit bord annulaire, voisin du diamètre de la jupe du futur tube fabriqué avec cette pièce, est compris entre 18 et 50 mm.

L'invention a encore pour objet un procédé de fabrication d'un revêtement intérieur annulaire de tête de tube, utilisable pour l'obtention de la pièce monobloc précédente selon le préambule de la revendication 13 (tel qu'il est connu par BE-A-666 719), caractérisé en ce que :
a) ladite portion de bande comporte avant formage la même succession de couches que ledit revêtement à obtenir, la ou lesdites couches(s) interne(s) à effet barrière y étant ou étant ensemble plus mince(s) que chacune des couches superficielles dans ladite ébauche et étant polymérique(s) et en l'une des matières du groupe formé par EVOH, PVDC, PAN, PVDF, PA, saran, MXD6, et lesdites couches superficielles (6) étant toutes en PE, PP ou PET ;
b) on préchauffe ladite ébauche à une température de ramollissement de ses deux couches superficielles, et on la forme à chaud selon les étapes suivantes :
   b1) on la prédéforme en bol renversé au-dessus d'un outillage mâle définissant l'intérieur dudit revêtement à réaliser et donc l'intérieur de la tête, ledit outillage ayant une portion de tête de surface latérale axiale se raccordant à une épaule sensiblement tronconique ;
   b2) on la déforme et on l'applique sur ledit outillage mâle ;
   b3) puis on lisse ladite ébauche et on complète son application sur l'outillage mâle, au moyen d'une matrice définissant la forme extéreure dudit revêtement ;
c) on obtient au moyen dudit formage à chaud un revêtement intérieur annulaire continu comportant une cheminée axiale surmontant ledit épaulement annulaire, sa ou sesdites couches à effet barrière ayant une épaisseur totale comprise entre 0,008 et 0,05 mm et ses couches superficielles intérieure et extérieure ayant chacune une épaisseur comprise entre 0,25 et 1,2 mm, ledit revêtement intérieur annulaire ayant une épaisseur comprise entre 0,5 et 2,5 mm et un rapport de sa hauteur totale au diamètre intérieur de sadite cheminée compris entre 1 et 2,5.

### AVANTAGES

- La fabrication thermoformée de la pièce monobloc servant de revêtement intérieur permet une grande souplesse dans le choix des qualités et efficacités de barrière
- Possibilité de réaliser des revêtements barrière avec opercule.
- Amélioration de la qualité de la surface intérieure de la tête de tube, grâce à des jonctions soudées étanches.

### EXEMPLES

La figure 1 représente une première tête de tube selon l'invention, en demi-coupe axiale.

La figure 2 représente partiellement une deuxième tête de tube selon l'invention, en demi-coupe axiale.

Les figures 3 à 5 schématisent les étapes de fabrication d'une pièce monobloc pour revêtement intérieur par thermoformage.

La figure 6 représente une troisième tête de tube avec opercule.

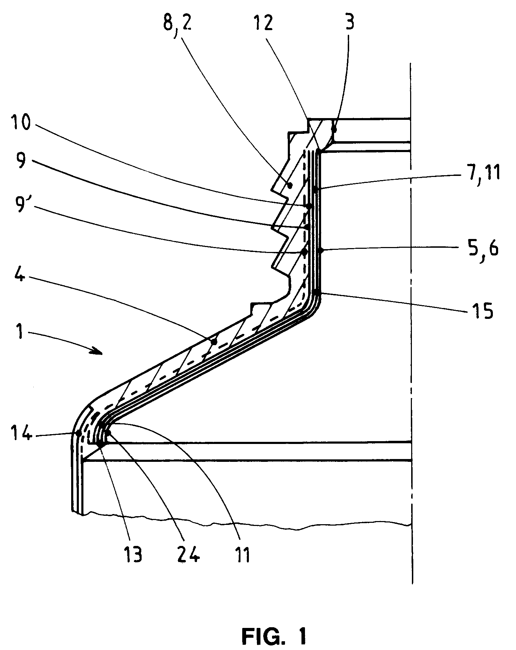

### 1/ EXEMPLES 1 (figure 1)

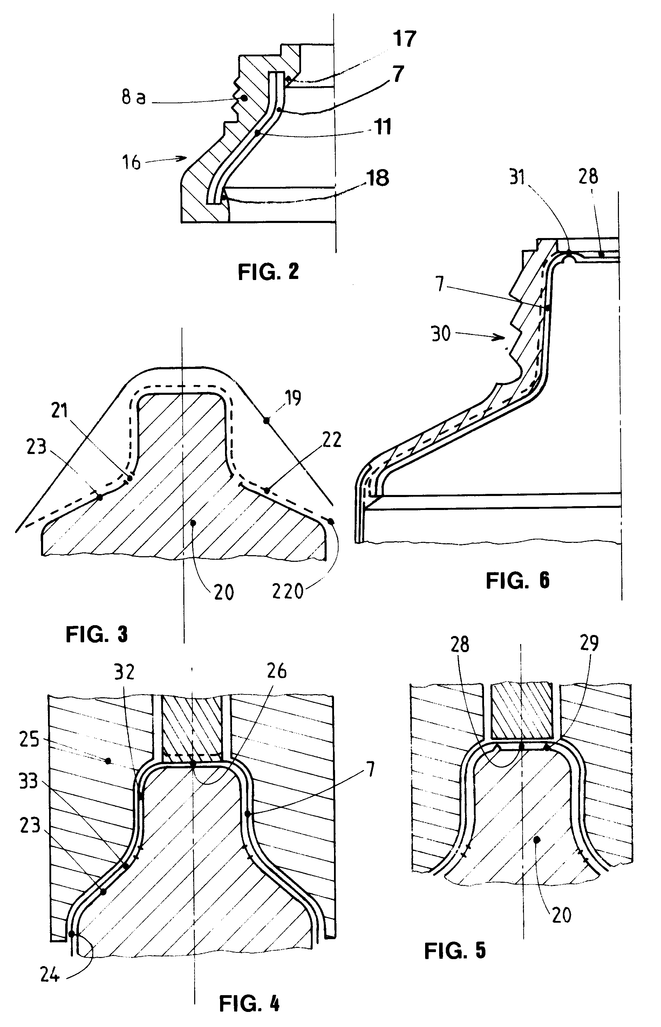

On peut voir sur la figure 1 une tête de tube 1 ayant un goulot 2 avec orifice d'extrémité 3 de diamètre 10 mm et une épaule 4 tronconique de hauteur intérieure 5 mm et de diamètre intérieur de base 25 mm. La hauteur de la cheminée 5 formant l'intérieur du goulot est de 10 mm, les 9 mm inférieurs sont formés par la couche superficielle intérieure 6 du revêtement intérieur à effet barrière 7 selon l'invention.
Cette couche superficielle 6, le recouvrement annulaire 8 constituant l'extérieur de la tête 1 et la couche superficielle extérieure 9 du revêtement 7 sont tous les trois en PE.
La couche 9 ne se distingue pas du recouvrement 8 après le surmoulage de la tête, on a toutefois schématisé en trait discontinu 9' la position de sa surface juste avant moulage.
On peut voir au microscope à infra-rouge la couche adhésive 10 reliant cette couche 9 et la couche barrière 11 en EVOH. La jonction du recouvrement 8 avec la couche superficielle intérieure 6 sur les tranches d'extrémité supérieure 12 et inférieure 13 du revêtement intérieur 7 est une soudure homogène en PE, et le recouvrement 8 ne forme pas de bourrelets intérieurs retenant le revêtement comme dans l'art antérieur et comme dans le cas de la figure 2, de tels bourrelets étant inutiles. On voit que le bas de la couche barrière 11 est très proche, ici à environ 0,6 mm, de la couche barrière 14 de la jupe sur laquelle la tête 1 est surmoulée en même temps que sur le revêtement intérieur 7, grâce au rebord d'extrémité 24 qui prolonge la partie tronconique du revêtement intérieur 7. Ce revêtement 7 a été préparé préalablement par thermoformage comme cela sera expliqué dans l'exemple 3. Il a dans cette tête 1, en comptant sa couche 9 dont la limite extérieure 9' a disparu, une épaisseur de 0,8 à 0,9 mm avec au centre 0,022 à 0,027 mm de couche barrière 11 en EVOH, deux couches superficielles 6 et 9 en PE de 0,38 mm chacune, et deux couches intermédiaires adhésives 10 et 15 d'épaisseur 0,03 mm chacune.

### 2/ EXEMPLE 2 (figure 2)

On a figuré le cas d'un recouvrement annulaire 8a en PP, le revêtement intérieur 7 étant le même que dans l'exemple 1 et la couche barrière 11 étant seule repérée. Avec une fixation dans la tête 16 par le surmoulage complétée par des bourrelets intérieurs 17 et 18 emprisonnant le revêtement intérieur 7, on se distingue de l'art antérieur par la qualité de ce revêtement intérieur 7 qui apporte son effet barrière renforcé sur presque toute la hauteur de la tête. Cette tête 16 est destinée à être fixée sur une jupe par collage ou par soudage par friction.

### 3/ EXEMPLE 3 (figures 3 à 5)

On a préparé plus de dix pièces monobloc identiques au revêtement intérieur 7 incorporé dans les têtes 1 et 16 de la façon suivante:
- on est parti d'une bande ébauche d'épaisseur 1,28 mm comprenant en allant d'une face à l'autre:
   0,58 mm de PE, puis 0,04 mm d'EAA, puis 0,040 mm de EVOH, puis 0,04 mm d'EAA, puis 0,58 mm de PE.
- on a chauffé chaque portion de bande à environ 110°C, on l'a prédéformée en bol renversé 19 au-dessus d'une forme mâle ou poinçon 20 (figure 3) équipé d'un système d'aspiration comprenant des orifices 21. Le poinçon 20 avait la forme de l'intérieur de la pièce monobloc 7 à réaliser (figure 4). La forme 19 a été ajustée de façon étanche sur l'outillage et immédiatement soumise à la dépression venant des orifices 21, et elle est venue se déformer et s'appliquer sur le poinçon 20 selon le profil 22. On a ensuite lissé ce profil 22 en l'appliquant avec plus de précision sur le poinçon 20 et son épaule 23, et en rabattant selon un rebord d'extrémité 24 incliné vers le bas le pourtour 220 du profil 22, au moyen d'une matrice de forme 25. On a effectué une découpe d'extrémité de ce rebord 24, et on a complété la mise en forme en faisant agir à chaud soit un couteau circulaire découpant un orifice central dans la pièce 7, soit un outil de compression amincissant à 0,3 à 0,4 mm d'épaisseur une portion centrale 26 de la tête de la pièce 7, pour obtenir un opercule 28 facilement découpable ou enfonçable. Cet amincissement 30 peut être global, ou bien périphérique, par exemple au droit d'une nervure périphérique 29 de la tête du poinçon 20.

### EXAMEN APRES FORMAGE

Epaisseur sur l'épaule 33 de la pièce: 0,9 mm, et à mi-hauteur de la cheminée 32 : 0,8 mm.
Epaisseur d'EVOH: 0,022 à 0,025 mm sur l'épaule 33, 0,027 mm à mi-hauteur de la cheminée 32 et dans l'opercule 28 non comprimé.

La déformation est régulière, il n'y a a donc pas de variations locales importantes de l'effet barrière.

### 4/ EXEMPLE 4 (figure 6)

Une tête de tube 30 est équipée d'un revêtement intérieur 7, la structure étant identique à celle de la figure 1 (exemple 1) à l'exception de l'opercule 28 laissé en tête de la pièce 7. Cet opercule 28, préparé par la technique de la figure 5, a un amincissement périphérique 31 d'épaisseur 0,35 mm épargnant un pont ou une patte de largeur 3 mm qui retiendra cet opercule 28 lorsqu'il sera enfoncé dans le goulot du tube.

### APPLICATION INDUSTRIELLE

L'invention s'applique à la fabrication de tubes à base de matière plastique de diamètres de jupe 18 à 50 mm, ayant un orifice de diamètre 5 à 18 mm, et contenant des produits pâteux ou crémeux à usage alimentaire, pharmaceutique et cosmétique, dont on veut conserver le parfum ou l'arôme et qu'on veut protéger de l'oxygène extérieur. Le revêtement intérieur de l'invention peut également être utilisé dans un goulot monobloc à double jupe, tel que celui décrit dans EP-A-315554 = US-A- 4942 981, ce revêtement recouvrant alors la surface intérieure de la jupe extérieure du goulot.

## Revendications

1. Tête de tube (1;16;30) en matière plastique comportant un goulot (2) qui surmonte une épaule (4) sensiblement tronconique, ladite tête ayant un revêtement intérieur annulaire (7) s'étendant sur au moins 50% de la surface intérieure sensiblement tronconique de ladite épaule (4), ledit revêtement (7) consistant en un élément multicouche (7) au moins en partie polymérique comprenant une couche superficielle extérieure (9) en matière plastique par laquelle il est fixé à un recouvrement annulaire (8) en une première matière plastique qui l'enserre et constitue l'extérieur (8;8a) de ladite tête (1;16;30), ledit élément (7) comprenant au moins une couche à effet barrière (11) et une couche superficielle intérieure (6) en polyoléfine ou en polyester, caractérisé en ce que ledit revêtement intérieur annulaire (7) s'étend aussi sur la surface intérieure du goulot (2) sur au moins 80 % de la hauteur de ladite surface en parfaite continuité avec sondit revêtement de la surface intérieure de l'épaule (4) , et en ce que sa ou ses couche(s) à effet barrière est ou sont polymérique(s) et d'épaisseur totale comprise entre 0,008 et 0,05 mm et sa couche superficielle intérieure (6) a une épaisseur comprise entre 0,25 et 1,2 mm..

2. Tête de tube selon la revendication 1, dans laquelle ladite première matière plastique est de même nature que la matière plastique de ladite couche superficielle extérieure (9) dudit revêtement (7) ladite couche (9) étant ainsi soudée en parfaite continuité avec ledit recouvrement annulaire (8) de la tête.

3. Tête de tube selon l'une quelconque des revendications 1 ou 2, dans laquelle ladite matière plastique de la couche superficielle intérieure (6) est de même nature que ladite première matière plastique, ladite matière de ladite couche superficielle intérieure (6) étant alors parfaitement soudée audit recouvrement annulaire (8) sur les tranches d'extrémité (12,13) dudit revêtement intérieur (7).

4. Tête de tube selon la revendication 2, dans laquelle ladite couche superficielle extérieure (9) en continuité avec ledit recouvrement annulaire (8) est délimitée dans l'épaisseur dudit revêtement intérieur par une couche adhésive (10) d'épaisseur comprise entre 0,006 et 0,06 mm, ladite couche adhésive (10) revêtant une dite couche à effet barrière (11) du revêtement intérieur (7).

5. Tête de tube selon la revendication 3, dans laquelle ledit revêtement intérieur (7) à effet barrière recouvre toute ladite surface intérieure tronconique de ladite épaule (4) et se prolonge par un rebord d'extrémité (24) incliné vers le bas, les portions dudit recouvrement annulaire (8) qui sont soudées aux deux tranches d'extrémité (12,13) dudit revêtement (7) se terminant au ras du bord intérieur desdites tranches (12,13).

6. Tête de tube selon l'une quelconque des revendications 1 à 5, dans laquelle ledit revêtement (7) comprend à l'extrémité supérieure de sa portion recouvrant l'intérieur (5) dudit goulot (2) une partie en forme d'opercule (28) le prolongeant et l'obturant.

7. Tête de tube selon la revendication 6, dans laquelle ladite partie en forme d'opercule (28) comporte un amincissement périphérique (31) facilitant sa découpe ou sa rupture par enfoncement dans le tube.

8. Tête de tube selon l'une quelconque des revendications 1 à 7, dans laquelle ledit revêtement intérieur (7) a la structure et la composition suivantes:
- épaisseur 0,5 à 2,5 mm
- au moins 5 couches liées entre elles et comprenant:
a) 2 couches superficielles intérieur (6) et extérieure (9) de même nature que ladite première matière plastique formant l'extérieur (28) de la tête, chacune d'épaisseur comprise entre 0,25 et 1,2 mm et en l'une et même matière plastique du groupe formé par PE, PP et PET;
b) une ou plusieurs couches internes à effet barrière (11) d'épaisseur totale 0,008 à 0,05 mm, chaque couche étant en l'une des matières du groupe formé par: EVOH, PVDC, PAN, PVDF, PA, saran, MXD6.
c) des couches adhésives (10) entre toutes les couches précédentes.

9. Pièce monobloc (7), utilisable comme revêtement intérieur (7) dans la tête de tube (1;16;30) de l'une quelconque des revendications 1 à 8, comportant essentiellement une cheminée axiale (33) surmontant un épaulement annulaire (32) sensiblement tronconique, le rapport H/dᵢ de la hauteur totale de ladite pièce (7) au diamètre intérieur de ladite cheminée (33) étant compris entre 1 et 2,5, ladite pièce (7) ayant une paroi comprenant au moins une couche à effet barrière (11), caractérisée en ce que cette pièce (7) a une épaisseur comprise entre 0,5 et 2,5 mm et que sa paroi consiste essentiellement en :
- 2 couches superficielles respectivement intérieure (6) et extérieure (9), toutes deux en PE ou PP ou PET, chacune d'épaisseur comprise entre 0,25 et 1,2 mm ;
- une ou plusieurs couches internes à effet barrière (11) d'épaisseur totale 0,008 à 0,05 mm, chacune étant en l'une des matières du groupe formé par : EVOH, PVDC, PAN, PVDF, PA, saran, MXD6 ;
- des couches adhésives (10) entre toutes les couches

10. Pièce selon la revendication 9, dans laquelle ladite cheminée (33) est obturée à son extrémité haute par une partie transversale continuant sa paroi.

11. Pièce selon la revendication 10, dans laquelle ladite partie transversale obturant la cheminée (33) comporte un amincissement périphérique (31), facilitant son ouverture.

12. Pièce selon l'une quelconque des revendications 9 à 11, dans laquelle ledit épaulement annulaire (32) se prolonge par un bord annulaire d'extrémité (24) incliné vers le bas, le rapport du diamètre intérieur dudit bord annulaire (24) audit diamètre intérieur de la cheminée (33) étant compris entre 2 et 3 et ledit diamètre intérieur dudit bord annulaire (24) étant compris entre 18 et 50 mm.

13. Procédé de fabrication (1;16;30) d'un revêtement intérieur annulaire (7) de tête de tube, utilisable pour l'obtention de la pièce de l'une quelconque des revendications 9 à 12, ledit revêtement (7) étant multicouche au moins en partie polymérique et devant définir l'intérieur de la tête en y étant enserré par un recouvrement annulaire (8) en matière plastique qui constitue l'extérieur de ladite tête, le revêtement comprenant une ou plusieurs couche(s) interne(s) à effet barrière vis-à-vis de l'oxygène, des arômes ou des parfums (11), deux couches superficielles (6,9) en matière plastique respectivement extérieure (9) et intérieure (6) et des couches adhésives (10) entre toutes les couches précédentes, la matière plastique de la couche superficielle extérieure (9) étant de même nature que la matière plastique dudit recouvrement annulaire (8) et les deux dites couches superficielles (6,9) étant en polyoléfine ou en polyester, ledit revêtement (7) comportant une épaule (32) sensiblement tronconique et étant fabriqué par formage d'une portion de bande multicouche ébauche dudit revêtement (7), caractérisé en ce que :
a) ladite portion de bande comporte avant formage la même succession de couches que ledit revêtement à obtenir, la ou lesdites couche(s) interne(s) à effet barrière (11) y étant ou étant ensemble plus mince(s) que chacune des couches superficielles (6,9) dans ladite ébauche et étant polymérique(s) et en l'une des matières du groupe formé par : EVOH, PVDC, PAN, PVDF, PA, saran, MXD6, et lesdites couches superficielles (6,9) étant toutes deux en PE, PP ou PET ;
b) on préchauffe ladite ébauche à une température de ramollissement de ses deux couches superficielles, et on la forme à chaud selon les étapes suivantes :
b1) on la prédéforme en bol renversé (19) au-dessus d'un outillage mâle (20) définissant l'intérieur dudit revêtement (7) à réaliser et donc l'intérieur de la tête (1;16;30), ledit outillage ayant une portion de tête de surface latérale axiale se raccordant à une épaule sensiblement tronconique (23) ;
b2) on la déforme et on l'applique sur ledit outillage mâle (20) ;
b3) puis on lisse ladite ébauche et on complète son application sur l'outillage mâle (20), au moyen d'une matrice (25) définissant la forme extéreure dudit revêtement (7) ;
c) on obtient au moyen dudit formage à chaud un revêtement intérieur annulaire continu (7) comportant une cheminée axiale (33) surmontant ladite épaule (32), sa ou sesdites couches à effet barrière (11) ayant une épaisseur totale comprise entre 0,008 et 0,05 mm et ses couches superficielles intérieure (6) et extérieure (9) ayant chacune une épaisseur comprise entre 0,25 et 1,2 mm, ledit revêtement intérieur annulaire (7) ayant une épaisseur comprise entre 0,5 et 2,5 mm et un rapport de sa hauteur totale au diamètre intérieur de sadite cheminée (33) compris entre 1 et 2,5.

14. Procédé selon la revendication 13, dans lequel ledit formage à chaud comporte l'étape de finition suivante :
b4) on découpe au sommet (36) de l'ébauche conformée en revêtement (7) un orifice central au moyen d'un couteau circulaire, ou on y façonne un opercule (27) facilement découpable ou enfonçable aminci globalement ou périphériquement par compression à chaud.

## Claims

1. A plastics tube head (1; 16; 30) of plastics material comprising a neck (2) surmounting a substantially truncated cone-shaped shoulder (4), said head having an annular lining (7) extending over at least 50% of the substantially truncated cone-shaped internal surface area of said shoulder (4), said lining (7) consisting of a multi-layered element (7) which is at least partially polymeric and comprises an external surface layer (9) of plastics material by means of which it is fixed to an annular covering (8) of a first plastics material which surrounds it and constitutes the exterior (8; 8a) of said head (1; 16; 30), said element (7) comprising at least one layer having a barrier effect (11) and one internal surface layer (6) of polyolefin or of polyester, characterised in that said annular lining (7) also extends over the internal surface of the neck (2) over at least 80% of the height of said surface in perfect continuity with said lining of the internal surface of the shoulder (4), and in that the layer(s) having a barrier effect is or are polymeric and has or have a total thickness of between 0.008 and 0.05 mm and its internal surface layer (6) has a thickness of between 0.25 and 1.2 mm.

2. A tube head according to claim 1,in which said first plastics material is of the same kind as the plastics material of said external surface layer (9) of said lining (7), said layer (9) therefore being welded perfectly continuously to said annular covering (8) of the head.

3. A tube head according to any one of claims 1 or 2, in which said plastics material of the internal surface layer (6) is of the same kind as said first plastics material, said material of said internal surface layer (6) therefore being perfectly welded to said annular covering (8) at the end faces (12, 13) of said lining (7).

4. A tube head according to claim 2, in which said external surface layer (9) in continuity with said annular covering (8) is defined in the thickness of said lining by an adhesive layer (10) having a thickness of between 0.006 and 0.06 mm, said adhesive layer (10) coating one said layer having a barrier effect (11) of the lining (7).

5. A tube head according to claim 3, in which said lining (7) having a barrier effect covers the entire truncated cone-shaped internal surface of said shoulder (4) and is extended by a downwardly inclined end rim (24), the portions of said annular covering (8) which are welded to the two end faces (12, 13) of said lining (7) ending flush with the internal rim of said faces (12, 13).

6. A tube head according to any one of claims 1 to 5, in which said lining (7) comprises, at the upper end of its portion covering the interior (5) of said neck (2), a lid-shaped portion (28) extending and blocking it.

7. A tube head according to claim 6, in which said lid-shaped portion (28) comprises peripheral thinning (31) facilitating the cutting out or breaking thereof by submergence in the tube.

8. A tube head according to any one of claims 1 to 7, in which said lining (7) has the following structure and composition:
- thickness 0.5 to 2.5 mm
- at least 5 interconnected layers comprising:
a) an internal surface layer (6) and an external surface layer (9) of the same kind as said first plastics material forming the exterior (28) of the head, each having a thickness of between 0.25 and 1.2 mm and of one and the same plastics material from the group formed by PE, PP and PET;
b) one or more internal layers having a barrier effect (11) and a total thickness of 0.008 to 0.05 mm, each layer being of one of the materials from the group formed by: EVOH, PVDC, PAN, PVDF, PA, Saran, MXD6;
c) adhesive layers (10) between all the preceding layers.

9. A monobloc member which can be used as a lining (7) in the tube head (1; 16; 30) according to any one of claims 1 to 8, essentially comprising an axial chimney (33) surmounting a substantially truncated cone-shaped annular shoulder (32), the ratio H/dᵢ of the total height of said member (7) to the internal diameter of said chimney (33) being between 1 and 2.5, said member (7) having a wall comprising at least one layer with a barrier effect (11), characterised in that this member (7) has a thickness of between 0.5 and 2.5 mm and that its wall consists essentially of:
- one respective internal surface layer (6) and external surface layer (9), both of PE or PP or PET and each having a thickness of between 0.25 and 1.2 mm;
- one or more internal layers having a barrier effect (11) and a total thickness of 0.008 to 0.05 mm, each layer being of one of the materials from the group formed by: EVOH, PVDC, PAN, PVDF, PA, Saran, MXD6;
- adhesive layers (10) between all the layers.

10. A member according to claim 9, in which said chimney (33) is blocked at its top end by a transverse portion continuing its wall.

11. A member according to claim 10, in which said transverse portion blocking the chimney (33) comprises peripheral thinning (31) facilitating the opening thereof.

12. A member according to any one of claims 9 to 11, in which said annular shoulder (32) is extended by a downwardly inclined annular end rim (24), the ratio of the internal diameter of said annular rim (24) to the internal diameter of the chimney (33) being between 2 and 3 and said internal diameter of said annular rim (24) being between 18 and 50 mm.

13. Process for producing (1; 16; 30) an annular lining (7) for a tube head which can be used for obtaining the member according to any one of claims 9 to 12, said lining (7) being multi-layered, at least partially polymeric and having to define the interior of the head while being surrounded by an annular covering (8) of plastics material constituting the exterior of said head, the lining comprising one or more internal layer(s) with a barrier effect with respect to oxygen, scents or flavourings (11), one external surface layer (9) and one internal surface layer (6) respectively of plastics material and adhesive layers (10) between all the preceding layers, the plastics material of the external surface layer (9) being of the same nature as the plastics material of said annular covering (8) and the two said surface layers (6, 9) being of polyolefin or polyester, said lining (7) comprising a substantially truncated cone-shaped shoulder (32) and being produced by shaping of a blank multi-layered strip portion of said lining (7), characterised in that:
a) before shaping, said portion of strip comprises the same succession of layers as said lining to be obtained, the layer(s) having a barrier effect (11) being or together being thinner than each of the surface layers (6, 9) in said blank and being polymeric and of one of the materials from the group formed by EVOH, PVDC, PAN, PVDF, PA, Saran, MXD6, and said surface layers (6, 9) all being of PE, PP or PET;
b) said blank is preheated to the temperature of softening of its two surface layers, and is hot formed by the following stages:
b1) it is predeformed in the shape of an inverted bowl (19) over a male tool (20) defining the interior of said lining (7) to be produced and therefore the interior of the head (1; 16; 30), said tool having a head portion with an axial lateral surface connected to a substantially truncated cone-shaped shoulder (23);
b2) it is deformed and applied to said male tool (20);
b3) said blank is then smoothed and its application to the male tool (20) is then completed by means of a female tool (25) defining the external shape of said lining (7);
c) said hot forming leads to a continuous annular lining (7) comprising an axial chimney (33) surmounting said annular shoulder (32), its layer or layers with a barrier effect (11) having a total thickness of between 0.008 and 0.05 mm and its internal surface layer (6) and external surface layer (9) each having a thickness of between 0.25 and 1.2 mm, said annular lining (7) having a thickness of between 0.5 and 2.5 mm and a ratio between its total height and the internal diameter of said chimney (33) of between 1 and 2.5.

14. Process according to claim 13, in which said hot forming comprises the following finishing stage:
b4) a central orifice is cut from the top (36) of the blank shaped to a lining (7) by means of a circular blade or a thin lid (27) which may easily be cut out or submerged in its entirety or peripherally by hot compression is shaped there.

## Patentansprüche

1. Tubenkopf (1; 16; 30) aus Kunststoff mit einem Hals (2), der über einer im wesentlichen kegelstumpfförmigen Schulter (4) angeordnet ist, wobei der genannte Kopf eine ringförmige Innenverkleidung (7) aufweist, die sich über mindestens 50 % der im wesentlichen kegelstumpfförmigen Innenfläche der genannten Schulter (4) erstreckt, wobei die genannte Verkleidung (7) aus einem mehrschichtigen, wenigstens zum Teil aus Polymer bestehenden Element (7) mit einer äußeren Oberflächenschicht (9) aus Kunststoff besteht, mit der es an einem ringförmigen Überzug (8) aus einem Erstkunststoff befestigt ist, der es umschließt und das Äußere (8; 8a) des genannten Kopfs (1; 16; 30) bildet, wobei das genannte Element (7) mindestens eine Schicht mit Sperrwirkung (11) und eine innere Oberflächenschicht (6) aus einem Polyolefin oder aus einem Polyester aufweist, dadurch gekennzeichnet, daß sich die genannte ringförmige Innenverkleidung (7) auch über die Innenfläche des Halses (2) zu mindestens 80 % der Höhe der genannten Fläche in vollkommener Kontinuität mit seiner genannten Verkleidung der Innenfläche der Schulter (4) erstreckt, und daß ihre Schicht(en) mit Sperrwirkung aus einem Polymer ist (sind) und eine Gesamtdicke von 0,008 bis 0,05 mm haben und ihre innere Oberflächenschicht (6) eine Dicke von 0,25 bis 1,2 mm hat.

2. Tubenkopf nach Anspruch 1, bei dem der genannte Erstkunststoff von der gleichen Art ist wie der Kunststoff der genannten äußeren Oberflächenschicht (9) der genannten Verkleidung (7), wobei die genannte Schicht (9) so in vollkommener Kontinuität mit dem genannten ringförmigen Überzug (8) des Kopfes verschweißt ist.

3. Tubenkopf nach einem der Ansprüche 1 oder 2, bei dem der genannte Kunststoff der inneren Oberflächenschicht (6) von der gleichen Art ist wie der genannte Erstkunststoff, wobei der genannte Kunststoff der genannten inneren Oberflächenschicht (6) dann mit dem genannten ringförmigen Überzug (8) an den Endabschnitten (12, 13) der genannten Innenverkleidung (7) entlang vollkommen verschweißt wird.

4. Tubenkopf nach Anspruch 2, bei dem die genannte äußere Oberflächenschicht (9) in Kontinuität mit dem genannten ringförmigen Überzug (8) in der Dicke der genannten Innenverkleidung durch eine Haftschicht (10) mit einer Dicke zwischen 0,006 und 0,06 mm abgegrenzt ist, wobei die genannte Haftschicht (10) eine sogenannte Schicht mit Sperrwirkung (11) der Innenverkleidung (7) überzieht.

5. Tubenkopf nach Anspruch 3, bei dem die genannte Innenverkleidung (7) mit Sperrwirkung die gesamte kegelstumpfförmige Innenfläche der genannten Schulter (4) bedeckt und sich in einer nach unten geneigten Endkante (24) fortsetzt, wobei die Teile dem genannten ringförmigen Überzugs (8), die an die beiden Endabschnitte (12, 13) der genannten Verkleidung (7) angeschweißt sind, mit dem inneren Rand der genannten Abschnitte (12, 13) abschließen.

6. Tubenkopf nach einem der Ansprüche 1 bis 5, bei dem die genannte Verkleidung (7) am oberen Ende ihres das Innere (5) des genannten Halses (2) bedeckenden Abschnitts einen Teil in Form eines Deckels (28) aufweist, der diesen verlängert und verschließt.

7. Tubenkopf nach Anspruch 6, bei dem der genannte in Form eines Deckels (28) ausgebildete Teil eine reduzierte Umfangsdicke (31) aufweist, durch die dessen Abtrennen oder Bruch durch Hineindrücken in die Tube erleichtert wird.

8. Tubenkopf nach einem der Ansprüche 1 bis 7, bei dem die genannte Innenverkleidung (7) folgenden Aufbau und Zusammensetzung aufweist:
- Dicke: 0,5 bis 2,5 mm
- mindestens 5 miteinander verbundenen Schichten, bestehend aus:
a) zwei Oberflächenschichten, einer inneren (6) und einer äußeren (9), die von der gleichen Art sind wie der genannte Erstkunststoff, der das Äußere (8) des Kopfs bildet, die jeweils zwischen 0,25 und 1,2 mm dick sind und aus ein und demselben Kunststoff der von PE, PP und PET gebildeten Gruppe bestehen;
b) einer oder mehrerer innerer Schichten mit Sperrwirkung (11) mit einer Gesamtdicke von 0,008 bis 0,05 mm, wobei jede Schicht aus einem der Stoffe der folgenden Gruppe besteht: EVOH, PVDC, PAN, PVDF, PA, Saran und MXD6;
c) Haftschichten (10) zwischen allen vohergenannten Schichten.

9. Einstückiges Teil (7), das als Innenverkleidung (7) in dem Tubenkopf (1; 16; 30) einer der Ansprüche 1 bis 8 verwendet werden kann, im wesentlichen bestehend aus einem Kanal (33) in Achsrichtung, der über einer ringförmigen, im wesentlichen kegelstumpfförmigen Schulter (32) angeordnet ist, wobei das Verhältnis H/dᵢ der Gesamthöhe des genannten Teils (7) zum Innendurchmesser des genannten Kanals (33) zwischen 1 und 2,5 liegt, wobei das genannte Teil (7) eine Wandung besitzt, die aus mindestens einer Schicht mit Sperrwirkung (11) besteht,
dadurch gekennzeichnet, daß dieses Teil (7) eine Dicke zwischen 0,5 und 2,5 mm hat und daß seine Wandung im wesentlichen besteht aus:
- zwei Oberflächenschichten, einer inneren (6) und einer äußeren (9), die beide aus PE oder PP oder PET bestehen, und die jeweils zwischen 0,25 und 1,2 mm dick sind;
- einer oder mehrerer innerer Schichten mit Sperrwirkung (11) mit einer Gesamtdicke von 0,008 bis 0,05 mm, wobei jede aus einem der Stoffe der folgenden Gruppe besteht: EVOH, PVDC, PAN, PVDF, PA, Saran, MXD6;
- Haftschichten (10) zwischen allen Schichten.

10. Teil nach Anspruch 9, bei dem der genannte Kanal (33) an seinem oberen Ende durch ein quer verlaufendes Teil verschlossen ist, das seine Wand verlängert.

11. Teil nach Anspruch 10, bei dem das genannte quer verlaufende Teil, das den Kanal (33) verschließt, eine reduzierte Umfangsdicke (31) aufweist, durch die dessen Öffnen erleichtert wird.

12. Teil nach einem der Ansprüche 9 bis 11, bei dem die genannte ringförmige Schulter (32) durch eine nach unten geneigte, ringförmige Endkante (24) verlängert wird, wobei das Verhältnis des Innendurchmessers der genannten ringförmigen Kante (24) zum genannten Innendurchmesser des Kanals (33) zwischen 2 und 3 liegt und der genannte Innendurchmesser der genannten ringförmigen Kante (24) zwischen 18 und 50 mm beträgt.

13. Herstellungsverfahren für eine ringförmige Innenverkleidung (7) eines Tubenkopfs (1; 16; 30), das anwendbar ist, um das Teil gemäß einem der Ansprüche 9 bis 12 zu erhalten, wobei die genannte Verkleidung (7) mehrschichtig und wenigstens zum Teil aus Polymer ist und das Innere des Kopfes definieren soll, wobei sie dort von einem ringförmigen Überzug (8) aus Kunststoff umschlossen wird, der das Äußere des genannten Kopfs bildet, wobei die Verkleidung eine oder mehrere Innenschicht(en) mit Sperrwirkung gegenüber Sauerstoff, Aromastoffen oder Geruchsstoffen (11), zwei Oberflächenschichten (6, 9) aus Kunststoff, eine außen (9) und eine innen (6) , sowie Haftschichten (10) zwischen allen vorherigen Schichten aufweist, wobei der Kunststoff der äußeren Oberflächenschicht (9) von gleicher Art ist wie der Kunststoff des genannten ringförmigen Überzugs (8) und wobei die beiden genannten Oberflächenschichten (6, 9) aus einem Polyolefin oder aus einem Polyester bestehen, wobei die genannte Verkleidung (7) eine im wesentlichen kegelstumpfförmige Schulter (32) aufweist, die durch Ausbilden eines, mehrschichtigen Streifenabschnittes als Vorformling der genannten Verkleidung (7) hergestellt wird, dadurch gekennzeichnet, daß
a) der genannte Streifenabschnitt vor dem Formen die gleiche Aufeinanderfolge von Schichten aufweist wie die zu erzielende Verkleidung, wobei die genannte(n) innere(n) Schicht(en) mit Sperrwirkung (11) dort dünner ist oder zusammen dünner sind als jede der Oberflächenschichten (6, 9) in dem genannten Vorformling sowie ein Polymer sind und aus einem der Stoffe der Gruppe bestehen, die von EVOH, PVDC, PAN, PVDF, PA, Saran, MXD6 gebildet wird, und wobei die genannten Oberflächenschichten (6, 9) beide aus PE, PP oder PET bestehen;
b) der genannte Vorformling auf eine Plastifizierungstemperatur seiner beiden Oberflächenschichten erwärmt wird und in den folgenden Schritten warmgeformt wird:
b1) er wird über einem Aufsteckwerkzeug (20), das das Innere der genannten, herzustellenden Verkleidung (7) und damit das Innere des Kopfs (1; 16; 30) umschreibt, in die Form einer umgekehrten Schüssel (19) gebracht, wobei das genannte Werkzeug einen Kopfabschnitt mit einer seitlichen Fläche in Achsrichtung aufweist, die sich an eine im wesentlichen kegelstumpfförmige Schulter (23) anschließt;
b2) er wird verformt und auf das genannte Aufsteckwerkzeug (20) aufgesetzt;
b3) sodann wird der genannte Vorformling geglättet und unter Verwendung einer Matrize (25), die die Außenform der genannten Verkleidung (7) umschreibt, vollständig auf das Aufsteckwerkzeug (20) gepaßt;
c) mit dem genannten Warmformen erhält man eine kontinuierliche ringförmige Innenverkleidung (7) mit einem Kanal (33) in Achsrichtung, der über der genannten ringförmigen Schulter (32) angeordnet ist, wobei ihre genannten Schichten mit Sperrwirkung (11) eine Gesamtdicke zwischen 0,008 und 0,05 mm haben und ihre innere (6) und äußere Oberflächenschicht (9) jeweils eine Dicke zwischen 0,25 und 1,2 mm haben, wobei die genannte ringförmige Innenverkleidung (7) eine Dicke zwischen 0,5 und 2,5 mm sowie ein Verhältnis ihrer Gesamthöhe zu dem Innendurchmesser ihres genannten Kanals (33) zwischen 1 und 2,5 aufweist.

14. Verfahren nach Anspruch 13, bei dem das genannte Warmformen den folgenden abschließenden Arbeitsschritt beinhaltet:
b4) es wird mit einem Rundmesser an der Spitze (36) des zur Verkleidung (7) geformten Vorformlings eine zentrale Öffnung geschnitten oder dort ein Deckel (28) ausgeführt, der leicht abzutrennen oder einzudrücken ist und durch Warmpressen gänzlich oder an der Umfangslinie dünner gemacht wird.
